(19) Europäisches Patentamt
European Patent Office
Office européen des brevets

(11) EP 4 715 376 A1

(12) EUROPEAN PATENT APPLICATION
published in accordance with Art. 153(4) EPC

(43) Date of publication:
25.03.2026 Bulletin 2026/13

(51) International Patent Classification (IPC):
G01N 23/20058 (2018.01)   G01N 23/04 (2018.01)
G01N 23/20 (2018.01)

(21) Application number: 23937582.7

(22) Date of filing: 22.12.2023

(52) Cooperative Patent Classification (CPC):
G01N 23/04; G01N 23/20; G01N 23/20058

(86) International application number:
PCT/JP2023/046094

(87) International publication number:
WO 2024/236850 (21.11.2024 Gazette 2024/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.05.2023 JP 2023081522

(71) Applicant: Rigaku Corporation
Akishima-shi
Tokyo 196-8666 (JP)

(72) Inventors:
• YAMANO, Akihito
  Akishima-shi, Tokyo 196-8666 (JP)
• ITO, Sho
  Akishima-shi, Tokyo 196-8666 (JP)

(74) Representative: Maiwald GmbH
Elisenhof
Elisenstraße 3
80335 München (DE)

(54) **STRUCTURAL ANALYSIS DEVICE, STRUCTURAL ANALYSIS METHOD, AND STRUCTURAL ANALYSIS PROGRAM**

(57) Summary

[Problem]
To provide a configuration capable of further supporting measurement in electron diffraction.

[Solution]
According to one aspect of the present invention, a structural analysis device using electron diffraction is provided. This structural analysis device is provided with at least one processor capable of executing a program so as to perform the following steps. In a display step, an image including a plurality of samples is displayed from transmitted electronic data, wherein the transmitted electronic data is transmitted electron data obtained by irradiating a region including the plurality of samples with an electron beam. In a calculation step, transmittance of each of the plurality of samples is calculated on the basis of the transmitted electronic data. In a selection step, at least one sample satisfying a predetermined condition is selected from within the image, wherein the predetermined condition is a condition related to the transmittance.

FIG. 1

**Description**

Technical Field

The present invention relates to a structural analysis device, a structural analysis method, and a structural analysis program.

Background Art

As conventional technology, there is a method for analyzing the crystal structure of a substance in order to determine the properties thereof. Conventional methods for analyzing the crystal structure of a substance include analysis methods using radiation such as electron beams, X-rays, and neutron beams. For example, according to PTL 1, electron beams are known to interact with matter several thousands to tens of thousands of times more strongly than X-rays. Therefore, measurements using electron beams make it possible to determine the structure of crystals that are only about a one-thousandth the size needed for X-ray structural analysis.

Citation List

Patent Literature

[PTL 1]Japanese Unexamined Patent Application Publication No. 2014-142357

Summary of Invention

Technical Problem

However, measurements using electron beams are known to vary in the quality of analysis results depending on the choice of crystals. The current crystal search method heavily relies on the measurer's experience and intuition, and the quality of a crystal can be judged based on the results of preliminary and actual measurements. Therefore, a minimum of five, and typically around ten, crystals are measured, and appropriate data are then selected from among multiple measurement results, which is an inefficient and time-consuming task. Although it is necessary to improve the efficiency of the crystal selection technique, there has been no known technology that provides display functionality to support the selection of crystals suitable for electron diffraction and to assist the measurer.
In view of the above circumstances, the present invention provides technology that can further support measurement in electron diffraction.

Means for Solving Problems

According to one aspect of the present invention, a structural analysis device employing electron diffraction is provided. The structural analysis device includes at least one processor configured to execute a program to perform the following steps. In a display step, an image including multiple samples is displayed from transmitted electron data, the transmitted electron data being data of transmitted electrons obtained by irradiating a region including the multiple samples with an electron beam. In a calculation step, the transmittance of each of the multiple samples is calculated based on the transmitted electron data. In a selection step, at least one sample that satisfies a predetermined condition is selected from the image, the predetermined condition being a condition related to the transmittance.
According to the present disclosure, it is possible to provide technology that can further support measurement employing electron diffraction.

**BRIEF DESCRIPTION OF DRAWINGS**

[FIG. 1] FIG. 1 is a diagram illustrating an example of the system configuration of a structural analysis system 1.
[FIG. 2] FIG. 2 is a diagram illustrating an example of the hardware configuration of a structural analysis device 2.
[FIG. 3] FIG. 3 is a diagram illustrating an example of the hardware configuration of an electron diffraction device 3.
[FIG. 4] FIG. 4 is a diagram illustrating an example of the functional units included in a processor 21.
[FIG. 5] FIG. 5 is a diagram illustrating an example of activities executed by the structural analysis system 1.
[FIG. 6] FIG. 6 is a diagram illustrating an example of an image region 4 including a transmission electron microscopy (TEM) image 40.

[FIG. 7] FIG. 7 is a diagram illustrating an example of the relationship between transmittance and the quality of diffraction spot data.

[FIG. 8] FIG. 8 is a diagram illustrating an example of the image region 4 including the TEM image 40 when a sample is selected.

## DETAILED DESCRIPTION

[Embodiment]

Hereinafter, an embodiment of the present invention will be described using the drawings. Various features discussed in the following embodiment can be combined with each other.

By the way, a program for implementing software described in the present embodiment may be provided on a non-transitory computer-readable recording medium, or it may be made available for download from an external server. Alternatively, it may be provided in a manner that allows the program to be run on an external computer, thereby implementing its functions on a client device (i.e., cloud computing).

In the present embodiment, the term "unit" may also include, for example, a combination of hardware resources implemented by a circuit in a broad sense, as well as the information processing performed by software that may be specifically implemented by such hardware resources. Additionally, various types of information are handled in the present embodiment, and such information may be represented by physical values such as signal values indicating voltage or current, by high and low signal levels in a binary bit set consisting of 0s and 1s, or by quantum superposition (i.e., qubits), and communication and computation may be executed by a circuit in a broad sense.

Furthermore, the term "circuit" in a broad sense refers to a circuit that is implemented by appropriately combining at least a circuit, circuitry, processor, and memory. That is, it includes application-specific integrated circuits (ASICs), programmable logic devices (such as simple programmable logic devices (SPLDs), complex programmable logic devices (CPLDs) and field-programmable gate arrays (FPGAs)), and similar devices.

1. System Configuration of Structural Analysis System 1

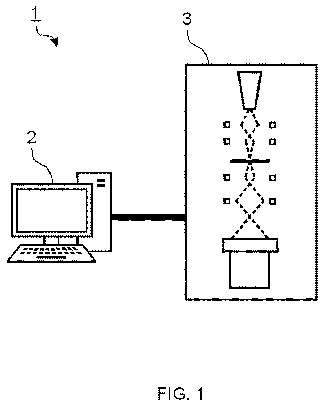

First, the system configuration of a structural analysis system 1 of the present embodiment is described with reference to FIG. 1.

FIG. 1 is a diagram illustrating an example of the system configuration of the structural analysis system 1. As illustrated in FIG. 1, the structural analysis system 1 includes a structural analysis device 2 and an electron diffraction device 3. The structural analysis device 2 and the electron diffraction device 3 are configured to communicate with each other via a communication cable or a network. This allows the structural analysis device 2 and the electron diffraction device 3 to mutually send or receive various types of information. Note that the structural analysis device 2 is an example of an information processing device and is not limited to the one in the present embodiment. In the present embodiment, the structural analysis device 2 is a PC (Personal Computer). The structural analysis device 2 may be a tablet computer, a smartphone, or a similar device instead of a PC. Here, a system exemplified by the structural analysis system 1 refers to one composed of one or more devices or components. Therefore, even the single structural analysis device 2 or the single electron diffraction device 3 is included in a system exemplified by the structural analysis system 1.

The structural analysis device 2 is a device configured to enable sample selection based on transmittance and structural analysis employing electron diffraction. The electron diffraction device 3 is a device configured to enable acquisition of transmitted electrons and diffraction spots. The structural analysis device 2 and the electron diffraction device 3 are operated by a user serving as a measurer.

2. Hardware Configuration

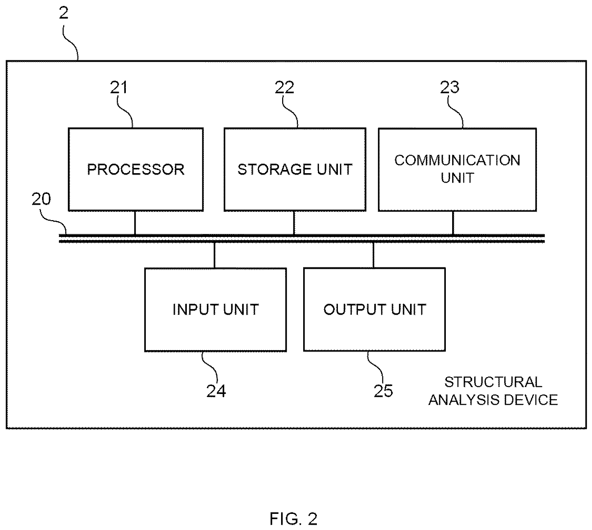

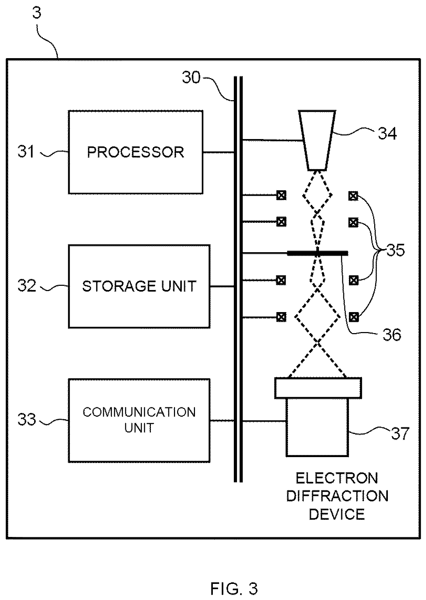

Next, the hardware configuration of the structural analysis device 2 and the electron diffraction device 3 of the present embodiment are described with reference to FIG. 2 and FIG. 3, respectively.

2.1. Hardware Configuration of Structural Analysis Device 2

FIG. 2 is a diagram illustrating an example of the hardware configuration of the structural analysis device 2. As illustrated in FIG. 2, the structural analysis device 2 includes a processor 21, a storage unit 22, a communication unit 23, an input unit 24, and an output unit 25, and these components are electrically connected inside the structural analysis device 2 via a communication bus 20. The structural analysis device 2 executes processing according to the embodiment.

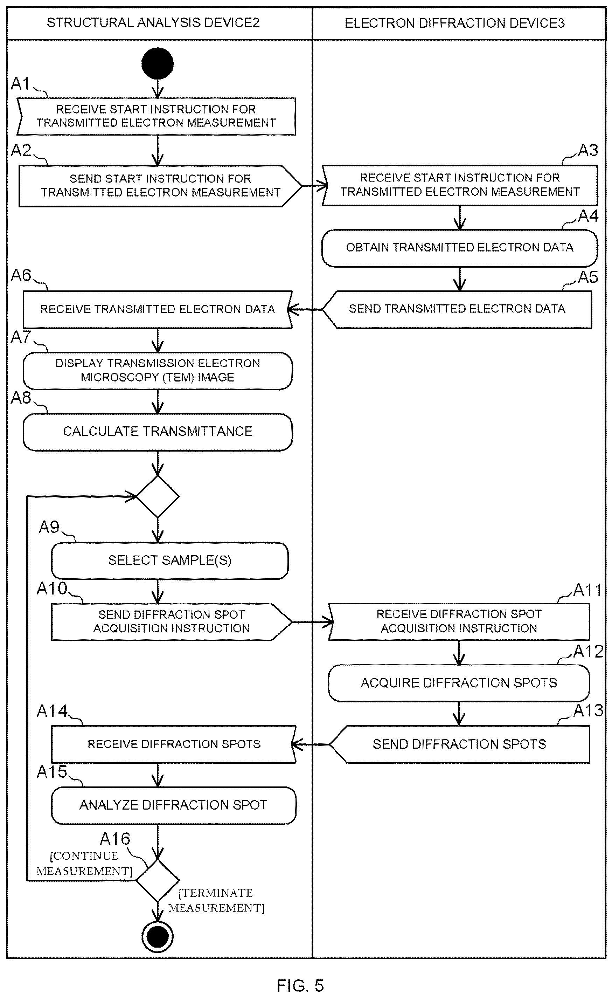

The processor 21 processes and controls the overall operation related to the structural analysis device 2. The processor 21 is, for example, a central processing unit (CPU). Information processing performed by a program stored in the storage unit 22 may be specifically implemented by the processor 21, which is an example of hardware, allowing it to be executed as each functional unit included in the processor 21. Each functional unit included in the processor 21 implements, for example, processing illustrated in FIGs. 5, 6, and 8, which will be described later. Note that the processor 21 is not limited to a single unit, and may be implemented with multiple processors 21 for the individual functions. A combination of the above is also acceptable.

The storage unit 22 stores various types of information defined by the foregoing description. For example, this may be implemented as a storage device such as a solid-state drive (SSD) that stores various programs pertaining to the structural analysis device 2 executed by the processor 21, or as a memory such as random-access memory (RAM) that stores temporarily required information (such as arguments and arrays) pertaining to the program operations. The storage unit 22 stores various programs pertaining to the structural analysis device 2 executed by the processor 21, variables, and data used by the processor 21 when performing processing based on the programs. The storage unit 22 is an example of a storage medium.

Although the communication unit 23 preferably includes wired communication means such as USB, IEEE 1394, Thunderbolt (registered trademark), and wired LAN network communication, it may also include wireless LAN network communication, mobile communication such as LTE/3G/4G/5G, and BLUETOOTH (registered trademark) communication as needed. That is, it is more preferable to implement the communication unit 23 as a set of these multiple types of communication means. In other words, the structural analysis device 2 may communicate various types of information from the outside via the communication unit 23.

The input unit 24 may be included in the housing of the structural analysis device 2, or it may be externally attached. For example, the input unit 24 may be implemented as a touchscreen integrated with the output unit 25. If it is a touchscreen, the user can input operations such as tapping, swiping, and the like. Of course, instead of a touchscreen, devices such as switch buttons, a mouse, and a keyboard may be adopted. That is, the input unit 24 receives input based on an operation performed by the user. This input is transferred as a command signal via the communication bus 20 to the processor 21, and the processor 21 may execute predetermined control or computation as needed.

The output unit 25 is capable of serving as a display device of the structural analysis device 2. The output unit 25 may, for example, be included in the housing of the structural analysis device 2, or it may be externally attached. The output unit 25 displays a graphical user interface (GUI) screen that can be operated by the user. For example, this is preferably implemented by selectively using display devices such as a CRT display, a liquid crystal display, an organic EL display, and a plasma display, depending on the type of the structural analysis device 2.

2.2. Hardware Configuration of Electron Diffraction Device 3

FIG. 3 is a diagram illustrating an example of the hardware configuration of the electron diffraction device 3. As illustrated in FIG. 3, the electron diffraction device 3 includes a processor 31, a storage unit 32, a communication unit 33, an irradiation unit 34, deflection units 35, a holder unit 36, and a detection unit 37, and these components are electrically connected inside the electron diffraction device 3 via a communication bus 30. The electron diffraction device 3 executes processing according to the embodiment. For the processor 31, storage unit 32, and communication unit 33 of the electron diffraction device 3, see the processor 31, storage unit 22, and communication unit 23 of the structural analysis device 2.

The irradiation unit 34 is configured to emit an electron beam. The irradiation unit 34 is, for example, an electron gun that emits an electron beam by accelerating electrons emitted from the cathode toward the anode.

The deflection units 35 are, for example, coils that generate magnetic fields to deflect the electron beam. Note that the deflection units 35 may be deflection plates that generate electrostatic fields to deflect the electron beam. The deflection units 35 deflect the electron beam based on a scanning signal generated by the processor 31.

The holder unit 36 is configured to support a mounting section. The mounting section is configured to mount a sample. The holder unit 36 may be configured, based on a movement instruction or a tilt instruction generated by the processor 21 or the processor 31, to move or tilt the mounting section in any desired direction.

The detection unit 37 is configured to detect transmitted or diffracted electrons. The detection unit 37 has a detection surface and counts the electrons incident on the detection surface. The detection unit 37 outputs intensity information corresponding to the number of electrons counted per unit time. It is preferable that the detection unit 37 be a two-dimensional detector that, in addition to the function of detecting electron beam intensity, can determine the electron beam's position within a two-dimensional region (i.e., planar region); however, it may alternatively be a zero-dimensional detector or a one-dimensional detector. The zero-dimensional detector is a detector that only has the function of detecting the intensity of the electron beam and has no position detection capability. The one-dimensional detector is a detector that, in addition to the function of detecting electron beam intensity, can detect the electron beam's position in a one-dimensional region (i.e., linear region).

3. Functional Configuration of Processor 21 of Structural Analysis Device 2

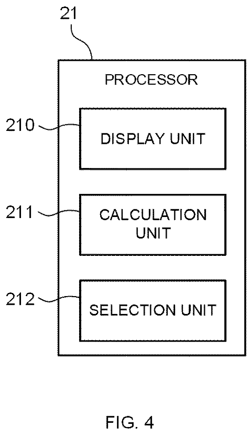

FIG. 4 is a diagram illustrating an example of the functional units included in the processor 21. As illustrated in FIG. 4, the processor 21 includes a display unit 210, a calculation unit 211, and a selection unit 212.

The display unit 210 displays an image including multiple samples from transmitted electron data.

The calculation unit 211 calculates the transmittance of each of the multiple samples based on the transmitted electron data.

The selection unit 212 selects at least one sample that satisfies a predetermined condition from the image. The display unit 210, calculation unit 211, and selection unit 212 will be described in detail later.

3. Flow of Operation of Structural Analysis System 1

Next, an example of preferred information processing performed by the structural analysis system 1 of the present embodiment is described. In this section, with reference to Fig. 5, an example of information processing for measuring diffraction spots after estimating (in advance) a sample likely to yield good diffraction spots from transmission electron data will be described. FIG. 5 is a diagram illustrating an example of activities executed by the structural analysis system 1.

Prior to starting the information processing, the user attaches the mounting section, on which a sample is placed, onto the holder unit 36. It is preferable that a single-crystal sample be selected as the sample, although an amorphous, polycrystalline, or quasicrystalline sample may also be selected. Additionally, it is preferable that a sample having a thickness of less than 1 $\mu$m be selected.

(Acquisition of Transmitted Electron Data)

At A1, the processor 21 receives a start instruction for transmitted electron measurement from the user. This start instruction for transmitted electron measurement instructs the structural analysis device 2 to start measuring the intensity of transmitted electrons from the sample and its vicinity.

At A2, the processor 21 sends the start instruction for transmitted electron measurement to the structural analysis device 2 via the communication unit 23.

At A3, the processor 31 receives the start instruction for transmitted electron measurement from the electron diffraction device 3 via the communication unit 33.

At A4, the processor 31 drives the irradiation unit 34, in response to receiving the start instruction for transmitted electron measurement. The irradiation unit 34 irradiates the sample with an electron beam. The detection unit 37 detects the electron beam that has passed through the sample as transmitted electrons. The processor 31 obtains the detection result of the transmitted electrons, detected by the detection unit 37, as transmitted electron data. The transmitted electron data is data that represents the intensity of transmitted electrons obtained by irradiating a measurement region 400, which includes multiple samples, with an electron beam.

At A5, the processor 31 transmits the transmitted electron data to the structural analysis device 2 via the communication unit 33.

At A6, the processor 21 receives the transmitted electron data from the electron diffraction device 3 via the communication unit 23.

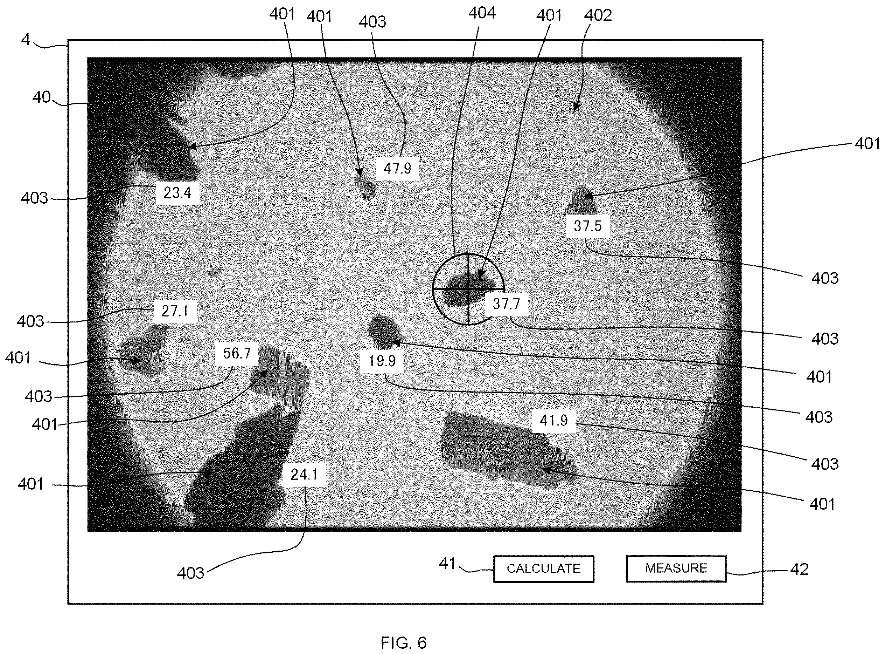

At A7, the display unit 210 generates a transmission electron microscopy (TEM) image 40 including multiple samples from the transmitted electron data. The display unit 210 displays the generated TEM image 40 as illustrated in FIG. 6. FIG. 6 is a diagram illustrating an example of an image region 4 including the TEM image 40. The image region 4 includes not only the TEM image 40, but also a calculation button 41 and a measurement button 42.

The TEM image 40 is an image generated from the transmitted electron data and displayed as an intensity distribution of the transmitted electrons. The TEM image 40 may be an image represented in grayscale or using other techniques such as a color map. It may also be an image after being processed by binarization, smoothing, or other similar processing. The TEM image 40 includes the measurement region 400, sample regions 401, a non-sample region 402, transmittance information 403, and an irradiation region 404.

The measurement region 400 is a region where the transmitted electron data is measured. The measurement region 400 is a region including multiple samples. Each of the sample regions 401 is a region where a sample is present within the TEM image 40. The non-sample region 402 is a region where no sample is present within the TEM image 40, and is a region excluding the sample regions 401. The transmittance information 403 is information that indicates the transmittance of a particular sample and is displayed in a manner corresponding to the sample region 401. The irradiation region 404 is a region that indicates the range where the diffraction spots are measured in response to receipt of a diffraction spot acquisition instruction. The irradiation region 404 may be configured to be movable according to user operations.

The calculation button 41 is a button used to start the calculation of the transmittance of each sample.

The measurement button 42 is a button used to generate a diffraction spot acquisition instruction. This diffraction spot acquisition instruction is an instruction that instructs the structural analysis device 2 to start acquiring diffraction spots.

The display unit 210 may have a function to identify samples by executing image processing on the TEM image 40. The display unit 210 identifies samples within the TEM image 40 based on the intensity distribution of the transmitted electrons in the TEM image 40. The method for extracting the sample regions 401 from the TEM image 40 may be any general method. For example, the method for extracting the sample regions 401 from the TEM image 40 may be either a method using binarization processing or a method using edge extraction with a differential filter.

At A8, in response to the pressing of the calculation button 41, the calculation unit 211 calculates the transmittance of each of the samples based on the transmitted electron data. Specifically, for example, the calculation unit 211 calculates the transmittance based on the average value of the transmitted electron data of a particular sample and the average value of the transmitted electron data in the vicinity of that sample. The calculation unit 211 uses the transmitted electron data of the non-sample region 402 as the transmitted electron data in the vicinity of the sample. At this time, the calculation unit 211 may use the non-sample region 402 located at a predetermined distance from the sample region 401 as data in the vicinity of the sample. This predetermined distance may be any distance within the range of, for example, 1 to 10 μm. The more specific method for calculating the transmittance may vary depending on whether the intensity of the transmitted electrons in the sample region 401 and non-sample region 402 is acquired as two-dimensional data, one-dimensional data, or zero-dimensional data.

When acquiring the intensity of the transmitted electrons in the sample region 401 and non-sample region 402 as two-dimensional data, the calculation unit 211 selects a particular sample region 401 and the non-sample region 402 surrounding that sample region 401 as the range. The calculation unit 211 may calculate the transmittance by dividing the average value of the transmitted electron data of the selected sample region 401 by the average value of the transmitted electron data of the non-sample region 402.

When acquiring the intensity of the transmitted electrons in the sample region 401 and non-sample region 402 as one-dimensional data, the calculation unit 211 selects a linear range with its start point and end point located on the non-sample region 402 and crossing a particular sample region 401. Alternatively, the calculation unit 211 selects a linear range with its start point located on the non-sample region 402 and its end point located on the sample region 401. The calculation unit 211 may calculate the transmittance by dividing the average value of the transmitted electron data of the sample region 401 along the selected line by the average value of the transmitted electron data of the non-sample region 402 along that line.

Furthermore, when acquiring the intensity of the transmitted electrons in the sample region 401 and non-sample region 402 as zero-dimensional data, the calculation unit 211 selects one or more arbitrary points from a particular sample region 401 and one or more arbitrary points from the non-sample region 402. The calculation unit 211 may calculate the transmittance by dividing the average value of the transmitted electron data of the selected sample region 401 by the average value of the transmitted electron data of the selected non-sample region 402.

The term "average value" is not limited to a simple average, and may include values obtained by other calculation methods, such as a weighted average, or values obtained by applying a calculation method different from the average value.

With the information processing at A8, it becomes possible to calculate the transmittance of each sample more accurately, making it easier for the user to select appropriate samples.

Upon completion of the calculation of the transmittance, the display unit 210 displays, for each of the samples, the sample region 401 and the transmittance information 403 in association with each other in the TEM image 40. The method of association may be any manner that allows the displayed transmittance information 403 to be recognizable as belonging to a specific sample. For example, the display unit 210 may display the transmittance information 403 in such a way that at least a part thereof overlaps with a specific sample regions 401. Additionally, for example, the display unit 210 may display the transmittance information 403 so that one piece of information does not overlap with two or more sample regions 401. This allows the user to more accurately recognize the transmittance of each sample, making it easier for the user to select appropriate samples. Furthermore, this reduces the dependency on the user's experience and intuition in selecting samples.

At A9, the selection unit 212 selects at least one sample that satisfies a predetermined condition from the TEM image 40. The method of selection may be any method capable of selecting a sample that satisfies a predetermined condition. For example, the selection unit 212 may select a sample by receiving from the user the selection of a sample in the sample region 401 that satisfies a predetermined condition. The selection unit 212 may automatically select any sample that satisfies a predetermined condition. For example, the selection unit 212 may select at least one sample from the TEM image 40 in order from the smallest difference between the transmittance and the predetermined value. This predetermined value may be a preset value, or a value arbitrarily set by the user, such as 30%, 31%, 32%, 33%, 34%, 35%, 36%, 37%, 38%, 39%, or 40%. The display unit 210 displays the irradiation region 404 so as to overlap the sample region 401 of the selected sample. Accordingly, samples that satisfy a predetermined condition are more likely to be appropriately selected.

This predetermined condition is a condition related to transmittance. The predetermined condition may be a condition that satisfies a range of transmittance, preferably a condition where the transmittance is between 20% and 50%. More preferably, the predetermined condition is a condition where the transmittance is between 30% and 40%. The predetermined condition may be a condition that specifies a range arbitrarily set by the user. Additionally, the predetermined condition may be set according to the elements contained. For example, the higher the atomic number of the contained elements, the higher the upper limit of the transmittance may be set. This makes it easier to select a sample with a relatively small diffraction spot spread of the transmitted electrons from among multiple samples. Moreover, by setting the upper limit of the transmittance in this way, it becomes easier to obtain the required diffraction electron intensity for performing crystal structural analysis, which in turn helps to suppress an increase in electron beam irradiation time during the crystal structural analysis.

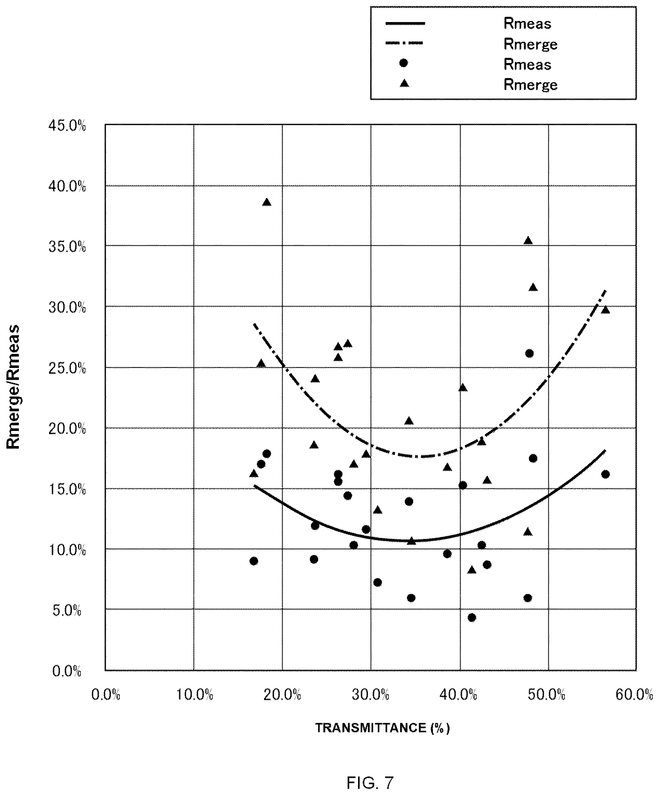

Next, the reason that the optimal transmittance value is estimated to be between 20% and 50% will be described with reference to FIG. 7. FIG. 7 is a diagram illustrating an example of the relationship between transmittance and the quality of diffraction spot data. In FIG. 7, a graph is illustrated that associates the transmittance and either Rmerge or Rmeas for multiple L-tyrosine crystals. The plots represented by multiple triangles included in the graph indicate the results for each of the multiple L-tyrosine crystals, with the transmittance values plotted on the x-axis and the Rmerge values on the y-axis. The plots represented by multiple circles included in the graph indicate the results for each of the multiple L-tyrosine crystals, with the transmittance values plotted on the x-axis and the Rmeas values on the y-axis. The dash-dotted line in the graph is a curve calculated by using the least-squares method based on the values of the plots represented by the triangles. The solid line in the graph is a curve calculated by using the least-squares method based on the values of the plots represented by the circles. The smaller the Rmerge and Rmeas values, the higher the quality of the diffraction spot data. From the graph, the Rmerge and Rmeas values become smaller when the transmittance is within the range between 20% and 50%. Therefore, it is estimated that a transmittance within the range of 20% to 50% is optimal for obtaining high-quality data.

This Rmerge indicates the agreement of intensities of equivalent reflections. Equivalent reflections are reflections that form diffraction points which should have the same intensity due to the symmetry of the crystal. Rmerge is calculated as follows. Here, $|I_i(hk1) - \langle I(hk1) \rangle|$ is the difference between the i-th intensity among the i measured equivalent diffraction points hkl and the average intensity. $(I(hkl))$ is the average intensity of the i diffraction points.

[Math. 1]

$$R_{merge} = \frac{\Sigma_{hkl}\Sigma_i |I_i(hkl) - \langle I(hkl) \rangle|}{\Sigma_{hkl}\Sigma_i I_i(hkl)}$$

This Rmeas is a redundancy-corrected parameter for Rmerge. Rmeas is calculated as follows. Here, n is the number of observations of the diffraction point hkl.

[Math. 2]

$$R_{meas} = \frac{\Sigma_{hkl}\sqrt{\frac{n}{n-1}}\Sigma_{i=1}^{n}|I_i(hkl) - \langle I(hkl) \rangle|}{\Sigma_{hkl}\Sigma_i I_i(hkl)}$$

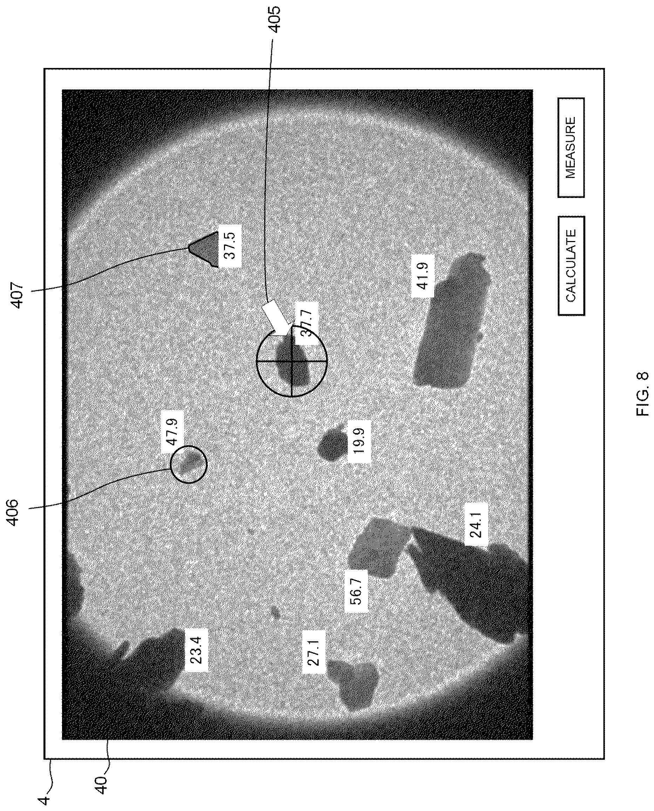

At A9, upon selection of one or more samples, the display unit 210 displays at least one selected sample in a highlighted manner, as illustrated in FIG. 8. FIG. 8 is a diagram illustrating an example of the image region 4 including the TEM image 40 when a sample is selected. The method for highlighting the display is not particularly limited, as long as it enables the user to identify that the sample has a transmittance satisfying the predetermined condition. For example, the display unit 210 may display at least one selected sample in a highlighted manner using a predetermined marker. The predetermined marker may be, for example: an arrow 405 pointing to a selected sample; an object 406 such as a circle or square surrounding a selected sample; a line 407 displayed along the outline of a sample region 401 of the selected sample; or a change in the display color of the sample region 401 of a selected sample. Accordingly, the selected samples are highlighted, making it easier to identify the samples selected by the user.

If multiple samples are selected at A9, the structural analysis system 1 executes the processes A9 to A14 for each of the samples in any order, and sequentially acquires the diffraction spots of each of the samples.

(Acquisition of Diffraction Spots)

At A10, the processor 21 generates a diffraction spot acquisition instruction in response to the pressing of the measurement button 42 in FIG. 6. The processor 21 sends the diffraction spot acquisition instruction to the electron diffraction device 3.

At A11, the processor 31 receives the diffraction spot acquisition instruction from the structural analysis device 2.

At A12, in response to receiving the diffraction spot acquisition instruction, the processor 31 drives the irradiation unit 34. The irradiation unit 34 irradiates the irradiation region 404 with an electron beam. The processor 31 generates a tilt instruction. In accordance with the tilt instruction, the holder unit 36 adjusts the angle of the mounting section. When the relationship between the sample and the electron beam is at an angle that satisfies the Bragg condition, diffracted electrons are generated from the sample irradiated with the electron beam, and the detection unit 37 detects these diffracted electrons. The processor 31 acquires diffracted spot data from the diffracted electrons detected by the detection unit 37.

At A13, the processor 31 transmits the diffraction spot data to the structural analysis device 2 via the communication unit 33.

At A14, the processor 21 receives the diffraction spot data from the electron diffraction device 3 via the communication unit 23.

At A15, the processor 21 receives a user operation on the input unit 24, thereby performing structural analysis of the sample based on the diffraction spot data.

At A16, upon completion of the structural analysis of the sample, the processor 21 receives a user operation on the input unit 24, thereby receiving an instruction as to whether to continue or terminate the measurement. If the structural analysis is to be continued using another sample, the processor 21 proceeds to activity A9. If the information processing is to be terminated, the structural analysis system 1 terminates the information processing.

According to the present embodiment, it is possible to provide technology that can further support measurement employing electron diffraction. In addition, since complex information processing is not required for executing technology supporting measurement employing electron diffraction, the use of cache memory of the structural analysis device 2 and the electron diffraction device 3 can be reduced. Moreover, by reducing the use of cache memory, large-scale equipment or computers are not required, and information processing can therefore be performed at low cost.

[Miscellaneous]

In the embodiment, an example has been described in which the display unit 210 identifies the sample regions 401 and the non-sample region 402 by performing image processing on the TEM image 40. In a modification, the display unit 210 may apply a color map to the TEM image 40 and display the sample regions 401 and the non-sample region 402 in user-distinguishable colors.

Additionally, in the embodiment, an example has been described in which the calculation unit 211 calculates the transmittance of each of multiple samples based on the transmitted electron data. In a modification, an example will be described in which the calculation unit 211 does not calculate transmittance but instead utilize the change in brightness according to transmittance. For example, in the modification, the display unit 210 may apply a color map to the TEM image 40, so that only samples with a brightness whose transmittance satisfies the predetermined condition are displayed in an identifiable color. In that case, the storage unit 22 may store in advance brightness information related to the brightness of samples whose transmittance satisfies the predetermined condition. The display unit 210 may apply a color map by referring to the brightness information stored in the storage unit 22.

In the embodiment, an example has been described in which the user operates the structural analysis device 2. In a modification, the user may operate the structural analysis device 2 by remote desktop via another information processing device.

With respect to the structural analysis system 1 according to the above-described embodiment, the structural analysis method includes the steps of the structural analysis device 2. The structural analysis program causes at least one computer to execute the steps of the structural analysis device 2.

Furthermore, the technology may also be provided in the following modes.

(1) A structural analysis apparatus employing electron diffraction, comprising: at least one processor configured to execute a program to perform steps comprising: a display step of displaying an image including a plurality of samples from transmitted electron data, the transmitted electron data being data of transmitted electrons obtained by irradiating a region including the plurality of samples with an electron beam; a calculation step of calculating transmittance of each of the plurality of samples based on the transmitted electron data; and a selection step of selecting at least one sample that satisfies a predetermined condition from the image, the predetermined condition being a condition related to the transmittance.

(2) The structural analysis apparatus according to (1), wherein: in the display step, for each of the plurality of samples, the sample and the transmittance are displayed in the image in association with each other.

(3) The structural analysis apparatus according to (1), wherein: in the selection step, at least one sample is selected from the image in order of increasing difference between the transmittance and a predetermined value.

(4) The structural analysis apparatus according to (1), wherein: the predetermined condition includes a condition that the transmittance is between 20% and 50%.

(5) The structural analysis apparatus according to (1), wherein: in the display step, the at least one selected sample is displayed in a highlighted manner.

(6) The structural analysis apparatus according to (1), wherein: in the calculation step, the transmittance is calculated based on the transmitted electron data of the sample and the transmitted electron data in vicinity of the sample.

(7) The structural analysis apparatus according to (1), wherein: in the display step, the plurality of samples is identified by performing image processing on the image.

(8) The structural analysis apparatus according to (1), wherein: each of the plurality of samples is a single crystal.

(9) A structural analysis method comprising: the steps of the structural analysis apparatus according to any one of (1) to (8).

(10) A structural analysis program that causes at least one computer to execute the steps of the structural analysis apparatus according to any one of (1) to (8).

Of course, the technology is not limited to these.

Finally, although various embodiments of the present invention have been described, these are presented merely as examples and are not intended to limit the scope of the invention. The novel embodiments may be implemented in various other forms, and various omissions, substitutions, and changes can be made without departing from the gist of the invention. Such embodiments and their modifications are included within the scope and gist of the invention, and also within the scope of the invention as defined in the claims and their equivalents.

[Reference Signs List]

1: structural analysis system
2: structural analysis device
20: communication bus
21: processor
210: display unit
211: calculation unit
212: selection unit
22: storage unit
23: communication unit
24: input unit
25: output unit
3: electron diffraction device
30: communication bus
31: processor
32: storage unit
33: communication unit
34: irradiation unit
35: deflection units
36: holder unit
37: detection unit
4: image region
40: transmission electron microscopy (TEM) image
400: measurement region
401: sample regions
402: non-sample region
403: transmittance information
404: irradiation region
405: arrow
406: object

407: line
41: calculation button
42: measurement button

**Claims**

1. A structural analysis apparatus employing electron diffraction, comprising:
   at least one processor configured to execute a program to perform steps comprising:

   a display step of displaying an image including a plurality of samples from transmitted electron data, the transmitted electron data being data of transmitted electrons obtained by irradiating a region including the plurality of samples with an electron beam;
   a calculation step of calculating transmittance of each of the plurality of samples based on the transmitted electron data; and
   a selection step of selecting at least one sample that satisfies a predetermined condition from the image, the predetermined condition being a condition related to the transmittance.

2. The structural analysis apparatus according to claim 1, wherein:
   in the display step, for each of the plurality of samples, the sample and the transmittance are displayed in the image in association with each other.

3. The structural analysis apparatus according to claim 1, wherein:
   in the selection step, at least one sample is selected from the image in order of increasing difference between the transmittance and a predetermined value.

4. The structural analysis apparatus according to claim 1, wherein:
   the predetermined condition includes a condition that the transmittance is between 20% and 50%.

5. The structural analysis apparatus according to claim 1, wherein:
   in the display step, the at least one selected sample is displayed in a highlighted manner.

6. The structural analysis apparatus according to claim 1, wherein:
   in the calculation step, the transmittance is calculated based on the transmitted electron data of the sample and the transmitted electron data in vicinity of the sample.

7. The structural analysis apparatus according to claim 1, wherein:
   in the display step, the plurality of samples is identified by performing image processing on the image.

8. The structural analysis apparatus according to claim 1, wherein:
   each of the plurality of samples is a single crystal.

9. A structural analysis method comprising:
   the steps of the structural analysis apparatus according to any one of claims 1 to 8.

10. A structural analysis program that causes at least one computer to execute the steps of the structural analysis apparatus according to any one of claims 1 to 8.

FIG. 1

FIG. 2

3

30

31 — PROCESSOR

32 — STORAGE UNIT

33 — COMMUNICATION UNIT

34

35

36

37

ELECTRON DIFFRACTION DEVICE

FIG. 3

21

PROCESSOR

210 — DISPLAY UNIT

211 — CALCULATION UNIT

212 — SELECTION UNIT

FIG. 4

| STRUCTURAL ANALYSIS DEVICE2 | ELECTRON DIFFRACTION DEVICE3 |
|---|---|

A1 — RECEIVE START INSTRUCTION FOR TRANSMITTED ELECTRON MEASUREMENT

A2 — SEND START INSTRUCTION FOR TRANSMITTED ELECTRON MEASUREMENT

A3 — RECEIVE START INSTRUCTION FOR TRANSMITTED ELECTRON MEASUREMENT

A4 — OBTAIN TRANSMITTED ELECTRON DATA

A6 — RECEIVE TRANSMITTED ELECTRON DATA

A5 — SEND TRANSMITTED ELECTRON DATA

A7 — DISPLAY TRANSMISSION ELECTRON MICROSCOPY (TEM) IMAGE

A8 — CALCULATE TRANSMITTANCE

A9 — SELECT SAMPLE(S)

A10 — SEND DIFFRACTION SPOT ACQUISITION INSTRUCTION

A11 — RECEIVE DIFFRACTION SPOT ACQUISITION INSTRUCTION

A12 — ACQUIRE DIFFRACTION SPOTS

A14 — RECEIVE DIFFRACTION SPOTS

A13 — SEND DIFFRACTION SPOTS

A15 — ANALYZE DIFFRACTION SPOT

A16 — [CONTINUE MEASUREMENT] / [TERMINATE MEASUREMENT]

FIG. 5

FIG. 6

FIG. 7

FIG. 8

**EP 4 715 376 A1**

## INTERNATIONAL SEARCH REPORT

| International application No. |
|---|
| **PCT/JP2023/046094** |

| A. | CLASSIFICATION OF SUBJECT MATTER |
|---|---|

*G01N 23/20058*(2018.01)i; *G01N 23/04*(2018.01)i; *G01N 23/20*(2018.01)i
FI:  G01N23/20058; G01N23/20 380; G01N23/04

According to International Patent Classification (IPC) or to both national classification and IPC

| B. | FIELDS SEARCHED |
|---|---|

Minimum documentation searched (classification system followed by classification symbols)

G01N23/00-G01N23/2276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2006-242914 A (FUJITSU LTD.) 14 September 2006 (2006-09-14) | 1-10 |
| A | JP 2014-142357 A (NANOMEGAS SPRL) 07 August 2014 (2014-08-07) | 1-10 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2024** | **30 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

19

## INTERNATIONAL SEARCH REPORT
### Information on patent family members

International application No.

**PCT/JP2023/046094**

| Patent document cited in search report | | | Publication date (day/month/year) | Patent family member(s) | | | Publication date (day/month/year) |
|---|---|---|---|---|---|---|---|
| JP | 2006-242914 | A | 14 September 2006 | (Family: none) | | | |
| JP | 2014-142357 | A | 07 August 2014 | US | 2011/0220796 | A1 | |
| | | | | WO | 2010/052289 | A1 | |
| | | | | EP | 2818852 | A1 | |

Form PCT/ISA/210 (patent family annex) (July 2022)

**EP 4 715 376 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014142357 A